# EUROPÄISCHE PATENTANMELDUNG

(11) **EP 1 134 570 A2**
(43) Veröffentlichungstag der Anmeldung: **19.09.2001**
(21) Anmeldenummer: 01890076.1
(22) Anmeldetag: 15.03.2001
(51) Int. Cl.: G01M 3/16, G01M 3/18

(54) **Verfahren und Vorrichtung zur Vermeidung von Schäden an Gebäuden, Einrichtungen und dgl.**

(30) Priorität: 16.03.2000 AT 1942000 U
(71) Anmelder: Plankenauer, Gerhard Ing., 4050 Traun (AT)
(72) Erfinder: Plankenauer, Gerhard Ing., 4050 Traun (AT)
(74) Vertreter: Babeluk, Michael, Dipl.-Ing. Mag.

(57) **Zusammenfassung**

Die Erfindung betrifft ein Verfahren und eine Vorrichtung zur Vermeidung von Schäden durch Medien, wie etwa Flüssigkeiten oder Gase, die in einem Gebäude in unerwünschter Weise austreten, wobei mindestens ein Sensor (1, 2, 3, 4) auf einer Auflagefläche angeordnet wird, der dazu ausgebildet ist, das Auftreten des Mediums elektrisch zu erfassen und bei Erfassung ein Signal an einen Empfänger (15) zu senden, worauf der Empfänger (15) ein Warnsignal aussendet und gleichzeitig oder zeitversetzt eine Absperrvorrichtung (13) aktiviert, um das weitere Austreten des Mediums zu unterbinden. Ein schnelles Ansprechverhalten wird dadurch erreicht, dass das Erfassen des Mediums durch Beobachtung einer Kapazitätsänderung an einem Plattenkondensator (24) erfolgt.

## Beschreibung

Die Erfindung betrifft ein Verfahren gemäß dem Oberbegriff des Patentanspruchs 1.

Durch austretende Medien kann es in Gebäuden zu hohen Sachschäden, aber auch zu einer Gesundheitsgefährdung von Personen kommen. Bei solchen Medien kann es sich um Wasser, giftige, ätzende oder leicht brennbare Flüssigkeiten, aber auch um Dämpfe oder Nebel handeln. Wesentlich zur Vermeidung von Schäden ist das rechzeitige Entdecken der Leckstelle, durch die die Medien austreten und das Treffen geeigneter Maßnahmen, um den entstandenen Schaden zu minimieren.

Aus der US 5,655,561 A ist ein System zur Verhinderung von Wasserschäden bekannt, das über Sensoren verfügt, die mit Elektroden ausgestattet sind. Wenn der elektrische Widerstand durch die Benetzung der Elektroden mit Wasser absinkt, wird ein Funksignal an eine entsprechende Steuerungseinrichtung ausgegeben. Für die Funktionsfähigkeit eines solchen Systems ist es erforderlich, dass bereits so viel Wasser ausgetreten ist, dass eine Überflutung auftritt, deren Höhe ausreicht, das entsprechende Signal auszulösen. Für andere Medien, insbesondere Gase, ist eine solche Vorrichtung nicht geeignet.

Weiters ist aus der US 5,202,667 A ein System zur Erfassung des Füllstandes von Behältern bekannt, das auf kapazitiver Basis arbeitet. Auch das darin beschriebene System ist nicht dazu geeignet, einen frühzeitigen Alarm nach dem Austreten geringer Mengen eines Mediums auszulösen.

Aufgabe der vorliegenden Erfindung ist es, diese Nachteile zu vermeiden und ein Verfahren und eine Vorrichtung zu schaffen, die ohne aufwändige Baumaßnahmen installiert werden kann und in bestehenden Gebäuden nachgerüstet werden kann. Ferner soll es ermöglicht werden, ein austretendes Medium frühzeitig zu erfassen, um Maßnahmen einleiten zu können, bevor schwerwiegende Schäden aufgetreten sind. Insbesondere sollen das Austreten von Flüssigkeiten erfassbar sein, bevor eine vollständige Überflutung der Räumlichkeiten auftritt, und es soll auch eine Erfassung von Gasaustritten möglich sein.

Erfindungsgemäß wird dies durch ein Verfahren gelöst, das die Merkmale des Patentanspruches 1 aufweist. Wesentlich an der Erfindung ist, dass eine einfach Montage möglich ist und dass die kapazitive Erfassung des Mediums ein schnelles Ansprechverhalten ergibt.

Eine durchschnittliche 120 m² Wohnung wird etwa mit zwei bis drei Sensoren bestückt. Die Sensoren werden bevorzugt über Batterien stromversorgt. Der Empfänger wird vorteilhafterweise fremdstromversorgt und befindet sich bevorzugt in unmittelbarer Nähe zum Absperrorgan der Wohnung, wo er in besonders zweckmäßiger Weise über ein Magnetventil, welches mit dem Empfänger leitend verbunden ist, die Sperre des Wasserzulaufs auslöst, und das im stromlosen Zustand geöffnet oder geschlossen ist und durch den Empfänger entsprechend angesteuert wird.

Als besonders vorteilhaft erweist sich, wenn die Sensoren ihr Signal als Funksignal an den Empfänger leiten. Bei größeren Objekten beziehungsweise ungünstiger Lage der Sensoren zum Empfänger kann der Einsatz von dazwischen geschalteten Relaisstationen zur Verstärkung des Funksignals erforderlich sein.

In Produktionsanlagen kann eine abrupte und unmittelbare Sperre der Wasserzufuhr eventuell Schäden an Maschinenteilen hervorrufen. Um solche Probleme auszuschließen, gibt der Empfänger sofort ein Warnsignal ab, etwa einen Hupton oder ein Drehlichtsignal, löst die Sperre der Wasserzufuhr jedoch erst mit einiger Zeitverzögerung aus.

In einer vorteilhaften Weiterbildung der Erfindung wird zusätzlich ein Warnsignal mittels üblichen Telekommunikationseinrichtungen zur Fernwartung und Fernerkennung weitergegeben.

Zur Durchführung des erfindungsgemäßen Verfahrens wird ein erfindungsgemäßer Sensor eingesetzt. Dieser Sensor kann für unterschiedlichste flüssige Substanzen ebenso eingesetzt werden wie etwa für höhere Luftfeuchtigkeitswerte beziehungsweise Nebel. Der Sensor besteht aus einem ringförmigen Dipol als Sendeantenne, einem offenen Plattenkondensator und Platinen zum Aufbau eines elektrischen Feldes. Bei Kontakt mit einer Flüssigkeit ändert sich die Kapazität schlagartig, wobei das Ausmaß seiner Änderung je nach Art des Mediums aufgrund der Dielektrizitätskonstante einen bestimmten Wert hat und somit eine Identifikation des jeweiligen Mediums ermöglicht wird.

Bei Anstieg von Luftfeuchtigkeit oder von Nebel ändert sich die Kapazität ebenfalls, hier jedoch nicht schlagartig, sondern kontinuierlich. Hier sendet der Sensor sein Signal an den Empfänger erst aus, nachdem das Ausmaß der Änderung der Kapazität eine vorbestimmte Größe erreicht hat.

Weiters betrifft die Erfindung eine Vorrichtung gemäß dem Patentanspruch 3. Diese ermöglicht in vorteilhafterweise die Ausführung der oben beschriebenen Verfahren.

Besonders vorteilhaft ist es, wenn der Sensor ein Gehäuse besitzt, das diesen nach oben abdeckt und das nach unten offen ist und das weiters eine Auflagefläche aufweist, mit der Sensor auf den Boden gestellt wird, und dass der Plattenkondensator Platten aufweist, die unmittelbar über der Auflagefläche parallel zu dieser angeordnet sind. Dadurch kann ein besonders schnelles Ansprechverhalten erreicht werden.

Eine besonders einfache Realisierung, die eine schnelle Abschaltung einer defekten Leitung ermöglicht wird erreicht, wenn der Empfänger über eine direkte Stromleitung mit der Absperrvorrichtung verbunden ist. Dazu ist es vorteilhaft, wenn der Empfänger in unmittelbarer Nähe dieser Absperrvorrichtung positioniert ist. Es ist vorteilhaft, wenn der Sensor in regelmäßigen Abständen ein Funktionsfähigkeitssignal an den Empfänger absendet, um die ordnungsgemäße Funktion der Anlage überprüfen zu können. Bei Vorliegen mehrerer Sensoren wird die Wartung dadurch erleichtert, dass am Empfänger der Zustand der einzelnen Sensoren angezeigt wird, so dass es im Störfall sofort möglich ist, den Ort beziehungsweise die Nummer des betreffenden Sensors zu erkennen.

Es ist ein Sicherheitsmerkmal der erfindungemäßen Vorrichtung, dass die Absperrvorrichtung nur nach Eingabe eines speziellen Befehls am Empfänger freigegeben werden kann. Weiters kann eine Kontrollstelle vorgesehen sein, die vom Empfänger über das Vorliegen einer Unregelmäßigkeit informiert wird. Eine solche Information kann über eine Leitung über Funk oder auch über ein Mobilfunknetz erfolgen.

Die Absperrvorrichtung ist vorzugsweise als Magnetventil ausgebildet, das im stromlosen Zustand geöffnet oder geschlossen ist und durch den Empfänger entsprechend angesteuert wird.

In der Folge wird die vorliegende Erfindung anhand der in den Figuren dargestellten Ausführungsbeispielen näher erläutert. Es zeigen:
- Fig. 1: eine schematische Darstellung der erfindungsgemäßen Vorrichtung,
- Fig. 2: eine Draufsicht auf einen Sensor und
- Fig. 3: einen Schnitt nach Linie III-III in Fig. 2.

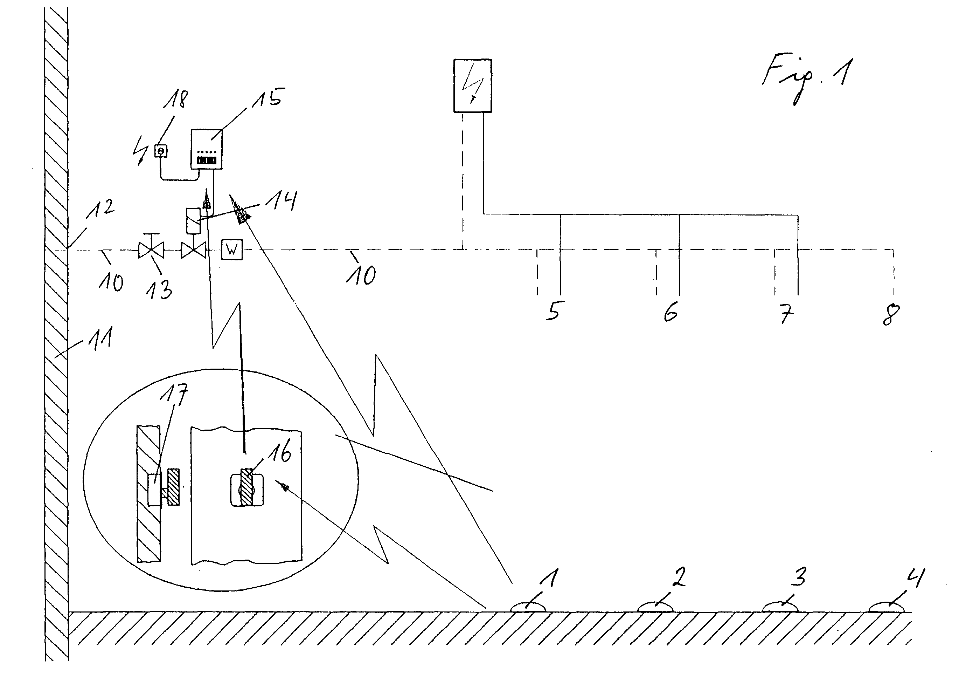

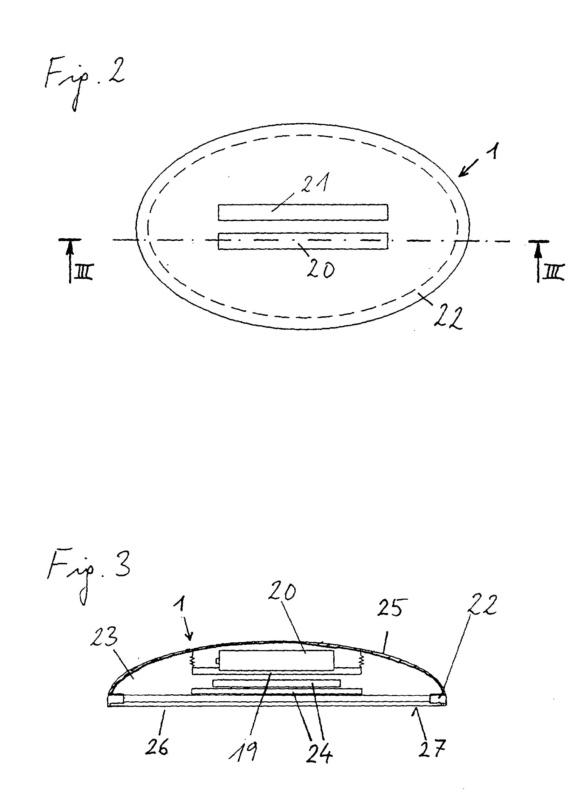

Fig. 1 zeigt den schematischen Aufbau der Vorrichtung. Die Sensoren 1, 2, 3 und 4 sind unterhalb möglicher Leckwasseraustrittsstellen auf dem Boden 9 aufgelegt. 5, 6, 7 und 8 bezeichnen Versorgungsstellen für Heiß- und Kaltwasser in einem üblichen Haushalt. Die Kaltwasserversorgungsleitung 10 tritt durch die Wand 11 an der Stelle 12 in den Wohnbereich ein und verfügt über einen Hauptabsperrhahn 13, mit dem im Bedarfsfall die gesamte Wasserversorgung der Wohnung zentral abgesperrt werden kann. Unmittelbar nach dem Hauptabsperrhahn 13 ist ein Magnetventil 14 in die Leitung eingebaut, welches üblicherweise im stromlosen Zustand in geöffneter Stellung verharrt. Das Magnetventil ist leitend mit einem Empfänger 15 verbunden.

Sobald einer der Sensoren 1, 2, 3 oder 4 ein Funksignal zum Empfänger 15 aussendet, wird vom Empfänger 15 das Magnetventil 14 aktiviert und sperrt die Leitung ab. Gleichzeitig wird ein Warnsignal ausgesandt.

In besonderen Fällen, z.B. in Produktionsanlagen kann der Empfänger auch derart programmiert sein, dass die Absperrung der Zufuhrleitung erst nach einer vordefinierten Zeitverzögerung erfolgt. Hier wird auch häufig das Problem auftreten, dass der Weg des Funksignals vom Sensor zum Empfänger zu weit ist oder eine störungsfreie Übermittlung erschwert wird durch diverse Maschinen oder bauliche Abschirmungen. Hier ist zwischen dem Sensor und dem Empfänger eine Relaisstation 16 zur Signalverstärkung/-übermittlung vorgesehen. Die Relaisstation 16 wird bevorzugt fremdstromversorgt über eine Steckdose 17. Ebenso wird der Empfänger 15 bevorzugt fremdstromversorgt über eine Steckdose 18.

Der Empfänger 15 besitzt einen Deaktivierungsknopf für das Warnsignal und das Magnetventil. Weiters wird im Störfall über eine Anzeigeeinrichtung die Identifikationsnummer des aktivierten Sensors anzeigt. Die laufende Überprüfung der Funktionsfähigkeit der Sensoren erfolgt in Intervallen von wenigen Stunden bis Tagen. Die Sensoren senden Signale an die Empfänger aus um ihr Einsatzbereitschaft anzuzeigen. Sobald das fällige Prüfungssignal nicht angezeigt wird, ergeht vom Empfänger über die Anzeige eine entsprechende Information. Solche Störungen werden meist auf leere Batterien zurück zu führen sein.

Mikroprozessor und Elektronik des Sensors befinden sich auf einer Platine 19, welche im Kunststoffgehäuse eingegossen und von außen unzugänglich ist. Die Stromversorgung erfolgt über zwei Trockenbatterien 20, 21. Den äußeren Rand des Sensors bildet ein ringförmiger Dipol 22. Die Kondensatorplatten 24 sind an der Unterseite in Bodennähe situiert und sind offen, um einen Mediumseintritt zwischen die Platten als Dielektrikum zu ermöglichen.

Der Dipol 22 definiert die Auflagefläche 27 und umschließt eine Öffnung 26 an der Unterseite des Gehäuses 25 des Sensors 1.

## Patentansprüche

1. Verfahren zur Vermeidung von Schäden durch Medien, wie etwa Flüssigkeiten oder Gase, die in einem Gebäude in unerwünschter Weise austreten, wobei mindestens ein Sensor (1, 2, 3, 4) auf einer Auflagefläche angeordnet wird, der dazu ausgebildet ist, das Auftreten des Mediums elektrisch zu erfassen und bei Erfassung ein Signal an einen Empfänger (15) zu senden, worauf der Empfänger (15) ein Warnsignal aussendet und gleichzeitig oder zeitversetzt eine Absperrvorrichtung (13) aktiviert, um das weitere Austreten des Mediums zu unterbinden, **dadurch gekennzeichnet, dass** das Erfassen des Mediums durch Beobachtung einer Kapazitätsänderung an einem Plattenkondensator (24) erfolgt.

2. Verfahren nach Anspruch 1, **dadurch gekennzeichnet, dass** das Signal an den Empfänger (15) ein Funksignal ist, das bei größeren Entfernungen zwischen dem Sensor (1, 2, 3, 4) und dem Empfänger (15) über Relaisstationen (16) übermittelt wird.

3. Vorrichtung zur Vermeidung von Schäden durch Medien, wie etwa Flüssigkeiten oder Gase, die in einem Gebäude in unerwünschter Weise austreten, mit mindestens einem Sensor (1, 2, 3, 4), der auf einer Auflagefläche angeordnet ist und der dazu ausgebildet ist, das Auftreten des Mediums elektrisch zu erfassen und ein Signal an einen Empfänger (15) zu senden, der eine Warneinrichtung aufweist und mit einer Absperrvorrichtung (13) in Verbindung steht, um das weitere Austreten des Mediums zu unterbinden, **dadurch gekennzeichnet, dass** der Sensor (1, 2, 3, 4) einen Plattenkondensator (24) aufweist, der das Vorliegen eines Mediums durch eine Kapazitätsänderung anzeigt.

4. Vorrichtung nach Anspruch 3, **dadurch gekennzeichnet, dass** der Sensor (1, 2, 3, 4) ein Gehäuse besitzt, das diesen nach oben abdeckt und das nach unten offen ist und das weiters eine Auflagefläche (27) aufweist, mit der Sensor (1, 2, 3, 4) auf den Boden gestellt wird, und dass der Plattenkondensator Platten (24) aufweist, die unmittelbar über der Auflagefläche parallel zu dieser angeordnet sind.

5. Vorrichtung nach einem der Ansprüche 3 oder 4, **dadurch gekennzeichnet, dass** die Stromversorgung des Sensors (1, 2, 3, 4) durch Batterien erfolgt.

6. Vorrichtung nach einem der Ansprüche 3 bis 5, **dadurch gekennzeichnet, dass** der Empfänger (15) über eine direkte Stromleitung mit der Absperrvorrichtung (13) verbunden ist.

7. Vorrichtung nach einem der Ansprüche 3 bis 6, **dadurch gekennzeichnet, dass** der Sensor (1, 2, 3, 4) eine Schaltung aufweist, die in vorbestimmten Zeitabständen ein Funktionsfähigkeitssignal an den Empfänger (15) sendet.

8. Vorrichtung nach einem der Ansprüche 3 bis 7, **dadurch gekennzeichnet, dass** mehrere Sensoren (1, 2, 3, 4) vorgesehen sind und dass der Empfänger (15) eine Anzeigeeinrichtung aufweist, die den Zustand der einzelnen Sensoren (1, 2, 3, 4) anzeigt.

9. Vorrichtung nach einem der Ansprüche 3 bis 8, **dadurch gekennzeichnet, dass** mindestens eine Relaisstation vorgesehen ist, die die Signale des Sensors (1, 2, 3, 4) verstärkt und an eine weitere Relaisstation (16) oder den Empfänger (15) weiterleitet.

10. Vorrichtung nach einem der Ansprüche 3 bis 9, **dadurch gekennzeichnet, dass** der Sensor (1, 2, 3, 4) einen Dipol (22) aufweist, der am äußeren Umfang einer Öffnung des Gehäuses angeordnet ist.
